# EUROPEAN PATENT SPECIFICATION

(11) **EP 0 411 375 B1**
(45) Date of publication and mention of the grant of the patent: **18.05.1994**
(21) Application number: 90113570.7
(22) Date of filing: 16.07.1990
(51) Int. Cl.: A47C 7/74, B60N 2/00

(54) **A seat for vehicles having an air conditioned passenger compartment**
Sitz für Fahrzeuge mit einem klimatisierten Fahrgastraum
Siège pour véhicules, pourvus d'un compartiment passager à air conditionné

(30) Priority: 04.08.1989 IT 6767889
(43) Date of publication of application: 06.02.1991
(73) Proprietor: FIAT AUTO S.p.A., 10135 Torino (IT)
(72) Inventor: Tarzia, Antonio,, I-10064 Pinerolo (IT)
(74) Representative: Jorio, Paolo

(56) References cited:
- DE-A- 2 039 121
- DE-A- 2 259 628
- US-A- 2 992 604
- US-A- 4 563 387
- US-A- 4 853 992

## Description

The present invention relates to a seat for vehicles having an air conditioned passenger compartment, in particular motor for vehicles.

The air conditioning system of known motor vehicles, even if optimized from the point of view of the regulation of the temperature and the distribution of air, does not succeed in eliminating the local discomfort that the passenger encounters at the points of contact between his body and the seat. Moreover the passenger in the rear seat is always in less favourable conditions than those of the front passenger because of the distribution of air, even in cases in which the air is delivered into the rear part of the passenger compartment, for example through a channel in the tunnel, or in which the treated-air delivery outlets are disposed in the rear doors, for example for de-misting the associated windows. In fact, the air leaving the outlets does not flow over the rear passenger with the same efficacy as that from the various outlets for the front passenger.

It is known from the document DE-A-2 259 628 a seat for a vehicle as motor-bus and an airplane, as well as for a cinema, wherein the seat back is provided with an air outlet connected to an air inlet and provided with a heat exchanging unit, said outlet being manually adjustable for directing the conditioned air to the rear passenger.

The technical problem of the invention consists in creating a seat in which temperature regulation of its surface is effected automatically, and which allows also the delivery of the conditioned air toward the rear passenger.

This technical problem is resolved by the motor vehicle seat according to the invention, which comprises a seat cushion provided with a structure fixed movably to a vehicle frame, an articulated seat back adapted to be fixed in an adjustable angular position on the said seat cushion, an inlet duct connected to the air conditioning system of the vehicle, and an outlet duct communicating with the said inlet duct and disposed on the said seat back in a position such as to convey at least part of the conditioned air received from the said inlet duct toward the rear passenger, and which is characterized by the fact that in the said cushion and/or in the said seat back there is formed a chamber connected between the said inlet duct and the said outlet duct where at least part of said received conditioned air circulates, the said chamber having a form such as to allow a heat exchange between the said conditioned air circulating therein and the body of the passenger seated on the seat.

The characteristics of the invention will become more clearly apparent from the following description of two variants of a preferred embodiment given by way of non-limitative example, and from the attached drawings, in which:-
Figure 1 is a schematic longitudinal section through a motor vehicle seat according to the invention;
Figure 2 is a section taken on the line II-II of Figure 1;
Figure 3 is a section taken on the line III-III of Figure 1 illustrating a first variant of the seat; and
Figure 4 is a section similar to that of Figure 3, according to a further variant of the seat.

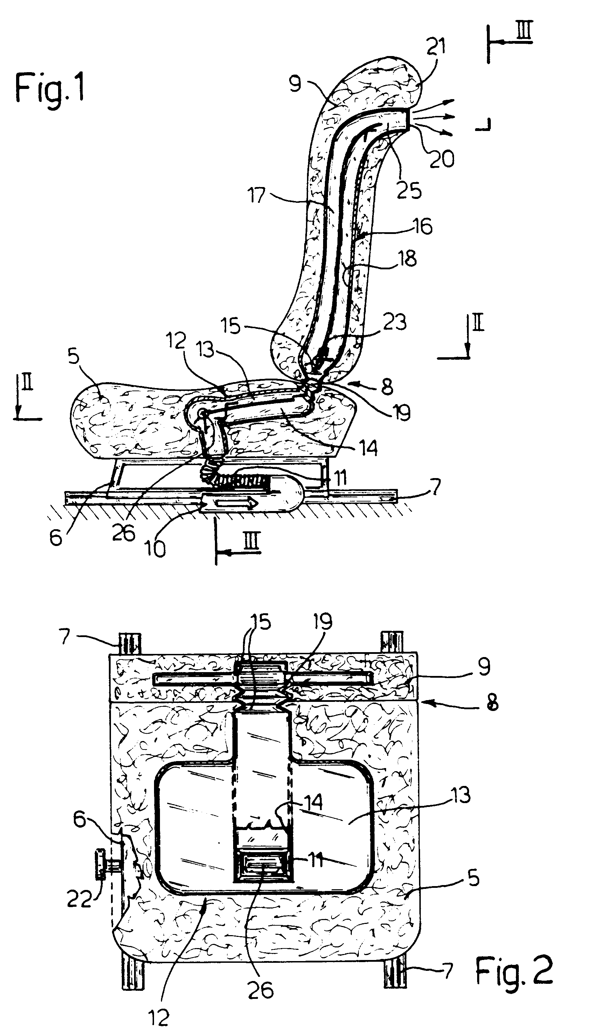

With reference to Figures 1 and 2, the seat comprises a seat cushion 5 fixed to a metal support structure 6. This structure is mounted on two longitudinal guides 7 disposed on the frame or body of the motor vehicle. The structure 6 can be fixed on the guides 7 in a known way in an adjustable longitudinal position. The seat further includes a articulated connection 8 for connecting the seat cushion 5 to a pivoted seat back 9, which can be fixed in a known way in an adjustable angular position with respect to the seat cushion 5.

The seat is suitable for a motor vehicle provided with an air conditioning system for conditioning air to be introduced into the passenger compartment. This system is adapted to regulate both the temperature and the humidity of the conditioned air selectively acting to heat or cool it. The system comprises a series of ducts for delivering the conditioned air to a set of outlets on the dashboard and possibly on the door windows.

According to the invention the air conditioning system further includes a duct 10 disposed in correspondence with each front seat to provide for conditioning of the seat itself. For this purpose the seat is provided with an inlet duct constituted by a bellows-type tube 11 which is connected to the duct 10 to allow the circulation of air in any longitudinal position of the structure 6 of the seat itself.

The seat cushion 5 is provided internally with a chamber 12 which is split into a wide cavity 13 (Figure 2) and a bypass duct 14 both in communication with the tube 11. The cavity 13 has a section very much greater than that of the duct 14 and is shaped in such a way as to present a wide upper surface to allow an effective heat exchange between the air circulating within its interior and the body of the passenger seated on the seat itself. The duct 14 is disposed longitudinally along the seat cushion 5 and carries air received from the tube 11 directly to an outlet duct section 15 disposed in correspondence with the articulated connection 8, which is also in communication with the cavity 13. Therefore the air which traverses the duct 14 does not participate in the conditioning of the seat.

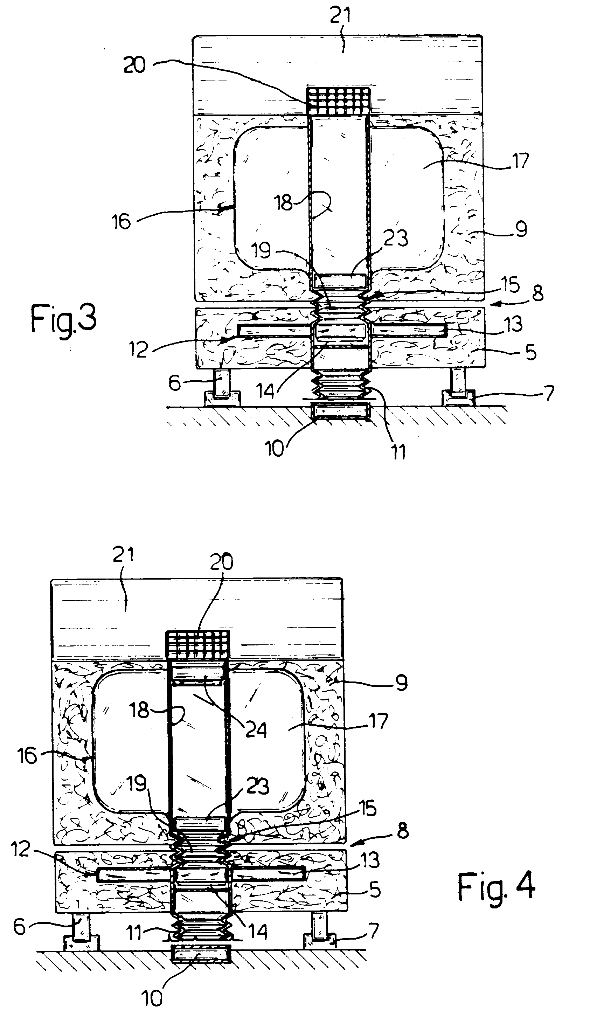

The seat back 9 is provided within its interior with a second chamber 16 split into a wide cavity 17 (Figures 3 and 4) and a bypass duct 18, both in communication with the duct 15. This duct therefore allows air leaving the chamber 12 to enter the chamber 16. To maintain communication between the two chambers 12 and 16 in any angular position of the seat back 9 the duct 15 includes a portion 19 constituting a bellows coupling of the duct 15 itself.

The cavity 17 also has a very much greater section than that of the duct 18 and is shaped in such a way as to present a wide surface for heat exchange with the passenger's shoulders. The duct 18 is disposed vertically along the seat back 9 and carries the air directly to an outlet section 25 (Figure 1) adjacent an outlet opening 20 so that the air in the duct 18 does not participate in conditioning the seat back 9. The section 25 is also in communication with the cavity 17, whilst the outlet 20 is disposed slightly beneath a padded edge 21 of the seat back 9 in such a way as to direct the air leaving it towards the body of the rear passenger.

Because of the wide section of the cavities 13 and 17 with respect to the section of the associated ducts 14 and 18, the air circulates within these cavities at a reduced velocity thereby increasing the comfort of the passenger.

The introduction of the conditioned air into the chamber 12 of the seat cushion 5 can be regulated by means of a deflector 26 disposed on the inlet duct 11 and movable by means of a handle 22 (Figure 2) disposed on one side of the structure 7. Furthermore, on the duct 15, close to or downstream of the coupling 19, there is disposed an air deflector 23 (Figures 3 and 4) by means of which the rate of flow of air towards the outlet 20 and the relative mixture between the air of the cavity 13 and that of the duct 14 can be regulated.

According to the variant of Figure 4 a further air deflector 24 is disposed in the inlet section 25 of the opening 20, by means of which the vertical and lateral direction of the air flow can also be adjusted as well as the rate of flow of exiting air and the relative mixing between that of the cavity 17 and that of the duct 18. A further deflector can be inserted in the duct 15, at the outlet from the chamber 12.

It is intended that the seat described can have various modifications and improvements introduced thereto without departing from the subject-matter of claims 1-7. For example the seat can be provided with two or more outlet openings disposed in suitable positions. Moreover the seat can be adapted for other types of passenger transport vehicles such as buses, aeroplanes etc.

## Claims

1. A seat for vehicles having an air conditioned passenger compartment, comprising a seat cushion (5) provided with a structure (6) fixed movably to a vehicle frame, an articulated seat back (9) adapted to be fixed in an adjustable angular position on the said seat cushion (5), an inlet duct (11) connected to the air conditioning system of the vehicle, and an outlet duct (20) communicating with the said inlet duct (11) and disposed on the said seat back (9) in a position such as to convey at least part of the conditioned air received from the said inlet duct (11) toward the rear passenger, characterized by the fact that in the said cushion (5) and/or in the said seat back (9) there is formed a chamber (12, 16) connected between the said inlet duct (11) and the said outlet duct (20) where at least part of said received conditioned air circulates, the said chamber (12, 16) having a form such as to allow a heat exchange between the said conditioned air circulating therein and the body of the passenger seated on the seat.

2. A seat according to Claim 1, in which the said structure (6) is adapted to be fixed in a longitudinally adjustable position on guide means (7) disposed on the said frame, characterized by the fact that the said inlet duct is constituted by a bellow-type tube (11) adapted to allow circulation of conditioned air in any longitudinal position of the said structure (6).

3. A seat according to Claim 1 or Claim 2, characterized by the fact that the said seat cushion (5) and the said seat back (9) are provided with two chambers (12 and 16) connected together by a bellows-type coupling (19) disposed in the articulated connection (8) between the said seat cushion and the said seat back.

4. A seat according to Claim 3, characterised by the fact that each of the said chambers (12, 16) comprises a cavity (13, 17) adapted to allow a low speed circulation of the received air, the said cavity being shaped in such a way as to present a wide heat exchange surface towards the said body of the passenger, each of the said chambers further including a corresponding bypass duct (14, 18) for delivering at least part of the said received air directly towards the said outlet (20) without participating in the conditioning of the seat.

5. A seat according to Claim 4, characterised by the fact that each of the said cavities (13, 17) and associated bypass ducts (14, 18) are connected to a common outlet section (15, 25) from the chamber (12, 16), the outlet section (25) from the chamber (16) of the said seat back (9) being in communication with the said outlet (20).

6. A seat according to Claim 5, characterised by the fact that it includes a regulator (26) for adjusting the rate of flow of conditioned air in the said inlet duct (11), and/or manual adjustment means (23, 24) for adjusting the rate of flow of conditioned air towards the said outlet (20).

7. A seat according to Claim 6, characterised by the fact that the said adjustment means comprise an air deflector (23) disposed in the outlet section (15) of the chamber (12) of the said seat cushion (5), and/or an air deflector (24) disposed in the outlet section (25) of the chamber (16) of the said seat back (9).

## Patentansprüche

1. Sitz für Fahrzeuge mit einem klimatisierten Fahrgastraum, mit einem Sitzkissen (5), welches mit einem bewegbar an einem Fahrzeugrahmen angebrachten Aufbau (6) versehen ist, einer gelenkig angebrachten Rückenlehne (9), welche für eine Anbringung an dem Sitzkissen (5) in einer einstellbaren Winkellage eingerichtet ist, einem mit der Klimaanlage des Fahrzeugs verbundenen Einlaßkanal (11) und einem Auslaßkanal (20), welcher mit dem Einlaßkanal (11) in Verbindung steht und an der Rückenlehne (9) an einer Stelle angeordnet ist, daß wenigstens ein Teil der aus dem Einlaßkanal (11) erhaltenen klimatisierten Luft dem Rücksitzfahrgast zugeleitet wird, dadurch gekennzeichnet, daß im Kissen (5) und/oder in der Rückenlehne (9) eine Kammer (12, 16) ausgebildet ist, welche zwischen dem Einlaßkanal (11) und dem Auslaßkanal (20) dort angeschlossen ist, wo wenigstens ein Teil der erhaltenen klimatisierten Luft zirkuliert, wobei die Kammer (12, 16) eine Form hat, die einen Wärmeaustausch zwischen der darin zirkulierenden klimatisierten Luft und dem Körper des auf dem Sitz sitzenden Fahrgasts erlaubt.

2. Sitz nach Anspruch 1, wobei der Aufbau (6) für eine Anbringung in in Längsrichtung einstellbarer Lage auf auf dem Rahmen angeordneten Führungsmitteln (7) eingerichtet ist, dadurch gekennzeichnet, daß der Einlaßkanal durch ein Balgrohr (11) gebildet ist, welches so eingerichtet ist, daß es eine Zirkulation von klimatisierter Luft in jeder Längsposition des Aufbaus (6) erlaubt.

3. Sitz nach Anspruch 1 oder 2, dadurch gekennzeichnet, daß das Sitzkissen (5) und die Rückenlehne (9) mit zwei Kammern (12 und 16) versehen sind, die miteinander durch eine balgartige Kupplung (19) verbunden sind, welche in der Gelenkverbindung (8) zwischen dem Sitzkissen und der Rückenlehne angeordnet ist.

4. Sitz nach Anspruch 3, dadurch gekennzeichnet, daß jede der Kammern (12, 16) einen Hohlraum (13, 17) aufweist, der so eingerichtet ist, daß er eine Zirkulation der erhaltenen Luft mit niedriger Geschwindigkeit gestattet, wobei der Hohlraum so geformt ist, daß er eine ausgedehnte Wärmeaustauschoberfläche zum Körper des Fahrgastes bietet, wobei jede der Kammern ferner einen Umgehnungskanal (14, 18) zum Liefern wenigstens eines Teiles der erhaltenen Luft direkt zum Auslaß (20) ohne Teilnahme an der Klimatisierung des Sitzes enthält.

5. Sitz nach Anspruch 4, dadurch gekennzeichnet, daß jeder der Hohlräume (13, 17) und der zugehörigen Umgehungskanäle (14, 18) mit einem gemeinsamen Auslaßabschnitt (15, 25) der Kammer (12, 16) verbunden sind, wobei der Auslaßabschnitt (25) der Kammer (16) der Rückenlehne (9) mit dem Auslaß (20) in Verbindung steht.

6. Sitz nach Anspruch 5, dadurch gekennzeichnet, daß er eine Reguliereinrichtung (26) zum Einstellen des Durchsatzes klimatisierter Luft in dem Einlaßkanal (11) und/oder manuelle Einstellmittel (23, 24) zum Einstellen des Durchsatzes klimatisierter Luft zum Auslaß (20) enthält.

7. Sitz nach Anspruch 6, dadurch gekennzeichnet, daß die Einstellmittel einen im Auslaßabschnitt (15) der Kammer (12) des Sitzkissens (5) angeordneten Luftablenker (23) und/oder einen im Auslaßabschnitt (25) der Kammer (16) der Rückenlehne (9) angeordneten Luftablenker (24) aufweisen.

## Revendications

1. Siège pour véhicules ayant un compartiment de passagers climatisé, qui comprend un coussin de siège (5) pourvu d'une structure (6) fixée de façon mobile à un châssis du véhicule, un dossier articulé (9) prévu pour être fixé dans une position angulaire réglable sur ledit coussin de siège (5), un conduit d'entrée (11) raccordé au système de climatisation du véhicule, et un conduit de sortie (20) qui communique avec ledit conduit d'entrée (11) et est placé sur ledit dossier (9) dans une position telle qu'au moins une partie de l'air conditionné venant dudit conduit d'entrée (11) est dirigée vers le passager arrière, caractérisé en ce que, dans ledit coussin (5) et/ou dans ledit dossier (9), est définie une chambre (12,16) connectée entre ledit conduit d'entrée (11) et ledit conduit de sortie (20) et dans laquelle circule au moins une partie dudit air conditionné venant du conduit d'entrée, ladite chambre (12,16) ayant une configuration telle qu'elle permet un échange de chaleur entre ledit air conditionné circulant dans la chambre et le corps du passager assis sur le siège.

2. Siège suivant la revendication 1, dans lequel ladite structure (6) est prévue pour être fixée dans une position longitudinalement réglable sur des moyens de guidage (7) disposés sur ledit châssis, caractérisé en ce que ledit conduit d'entrée est constitué par un tube du type à soufflet (11) qui permet la circulation de l'air conditionné dans toute position longitudinale de ladite structure (6).

3. Siège suivant la revendication 1 ou la revendication 2, caractérisé en ce que ledit coussin de siège (5) et ledit dossier de siège (9) comportent deux chambres (12 et 16) reliées l'une à l'autre par un raccord du type à soufflet (19) disposé dans la liaison articulée (8) entre ledit coussin de siège et ledit dossier de siège.

4. Siège suivant la revendication 3, caractérisé en ce que chacune desdites chambres (12,16) comprend une cavité (13,17) qui permet une circulation à faible vitesse de l'air reçu, ladite cavité ayant une configuration telle qu'elle présente une grande surface d'échange de chaleur vers ledit corps du passager, chacune desdites chambres comportant en outre un conduit de contournement correspondant (14,18) pour conduire au moins une partie du dit air reçu directement vers ladite sortie (20) sans que cet air participe au conditionnement du siège.

5. Siège suivant la revendication 4, caractérisé en ce que chacune desdites cavités (13,17) et chacun des conduits de contournement associés (14,18) sont connectés à un élément de sortie commun (15,25) de la chambre (12,16), l'élément (25) de sortie de la chambre (16) du dit dossier (9) étant en communication avec ledit orifice de sortie (20).

6. Siège suivant la revendication 5, caractérisé en ce qu'il comprend un régulateur (26) pour ajuster le débit d'air conditionné dans ledit conduit d'entrée (11), et/ou des moyens de réglage manuel (23,24) pour ajuster le débit d'air conditionné vers ledit orifice de sortie (20).

7. Siège suivant la revendication 6, caractérisé en ce que lesdits moyens de réglage comprennent un déflecteur d'air (23) disposé dans l'élément de sortie (15) de la chambre (12) dudit coussin de siège (5), et/ou un déflecteur d'air (24) disposé dans l'élément de sortie (25) de la chambre (16) dudit dossier (9).
